# EUROPÄISCHE PATENTSCHRIFT

(11) **EP 1 166 203 B1**
(45) Veröffentlichungstag und Bekanntmachung des Hinweises auf die Patenterteilung: **29.01.2003**
(21) Anmeldenummer: 00920643.4
(22) Anmeldetag: 31.03.2000
(51) Int. Cl.: G06F 17/30

(54) **VORRICHTUNG UND VERFAHREN ZUM VERARBEITEN UND DRUCKEN VON INFORMATIONEN**
DEVICE AND METHOD FOR PROCESSING AND PRINTING INFORMATION
DISPOSITIF ET PROCEDE DE TRAITEMENT ET D'IMPRESSION D'INFORMATIONS

(30) Priorität: 01.04.1999 DE 19915041
(43) Veröffentlichungstag der Anmeldung: 02.01.2002
(73) Patentinhaber: Océ Printing Systems GmbH, 85586 Poing (DE)
(72) Erfinder: WIEDEMER, Manfred, D-85737 Ismaning (DE)
(74) Vertreter: Schaumburg, Thoenes, Thurn Patentanwälte
(86) Internationale Anmeldenummer: EP0002900
(87) Internationale Veröffentlichungsnummer: WO00060446

(56) Entgegenhaltungen:
- WO-A-99/05618
- DE-A- 19 651 788
- US-A- 5 781 911

## Beschreibung

Die Erfindung betrifft eine Vorrichtung und ein Verfahren zum Verarbeiten und Drucken von Informationen.

Im Zuge der fortschreitenden Informationstechnologie werden Informationen auf immer mehr verschiedenen Wegen zur Verfügung gestellt. Die wohl rasanteste Entwicklung vollzog sich bei elektronisch gespeicherter Information. Gleichwohl ist es nach wie vor ein Bedürfnis, Informationen auszudrucken. Die vorliegende Erfindung betrifft insbesondere das Bedürfnis, elektronisch gespeicherte Informationen performant zu beschaffen und an einen Interessenten bequem und schnell gedruckt auszuliefern.

Dazu hat sich ein Spezialgebiet gebildet, das sogenannte "Print on Demand" (PoD). In diesem Bereich werden zum Beispiel Dienste angeboten, mit denen an bestimmten Druckstationen Taschenbücher auf Einzelbestellung gedruckt werden können. Dieses Verfahren erlaubt, daß die Bücher nicht zentral in großer Auflage gedruckt und gelagert werden müssen, und vom zentralen Lager an den Händler ausgeliefert werden, sondern daß der Händler lediglich die im Buch abgedruckten Informationen in elektronischer Form erhält und mit seiner Druckstation ausdruckt. Da sich der Händler in der Regel in der Nähe des Endkunden befindet, kann er diesem ohne Lagerhaltung ein beliebiges Buch anbieten und kurze Zeit später ausliefern. Ein solches System ist z.B. unter dem Titel "Entwicklung neuer Medien-Konzepte für PoD-Dienstleister" in der Zeitschrift Deutscher Drucker Nr. 35/98 vom 17.09.98 beschrieben. Derartige Systeme ermöglichen auch, daß der Informationsgehalt der Taschenbücher bzw. die entsprechenden Daten über das Internet an die Druckstation geliefert werden. Ein entsprechender Dienst wird beispielsweise von der Firma Xerox Corp. unter dem Handelsnamen "Xerox Book in Time" angeboten.

Gegenüber konventionellem Buchdruck und Buchhandel sind die Vorteile solcher PoD-Systeme, daß die Kosten für den Transport der Bücher über lange Strecken vermieden werden und daß keine Kosten für die Lagerhaltung der Bücher anfallen, da die Bücher auf Bestellung just-in-time gedruckt werden, kleine Auflagen wirtschaftlich verlegt werden können und die Anzahl der zu druckenden Bücher unabhängig von der Auflage ist, so daß bei entsprechender Nachfrage eine beliebig große Zahl von Büchern gedruckt wird. Zudem bedeutet dies für den Kunden eine schnellere Lieferung, da die elektronische Übermittlung des jeweiligen Buchinhalts über Datennetze innerhalb weniger Minuten erfolgen kann. Dies gilt insbesondere für selten bestellte Bücher.

Unter dem Handelsnamen HP Web PRINTSMART ist ein Software-Programm bekannt, bei dem Informationen aus unterschiedlichen Internet-Webseiten ausgelesen oder gespeichert und als einzelnes Dokument mit einem durchgehenden Format ausgedruckt werden können. Mit diesem Programm kann ein Benutzer zum Beispiel seine tägliche Zeitung zusammenstellen, die er über das Internet abruft und sich auf seinem Drucker ausdruckt. Die Besonderheit dieses Programmes ist, daß es Webseiten, die in einem Format zum Anzeigen am Bildschirm aufgebaut sind, in ein für den jeweiligen Drucker geeignetes Format umgesetzt werden. Dieses Programm liest lediglich Informationen aus Webseiten.

Die in der Webseite abgespeicherte Information dient in der Regel der Werbung und kann somit nur bedingt als Informationsquelle zu einem bestimmten Thema dienen.

Es gibt eine Vielzahl elektronischer Datenbanken, die allgemeine Themen abdecken können oder auf bestimmte Sachbereiche, insbesondere Berufszweige, spezialisiert sind. Derartige Datenbanken stehen in der Regel nur beschränkten Benutzerkreisen zur Verfügung, die mit den Anbietern dieser Datenbanken einen Vertrag abgeschlossen haben, gemäß dem sie die Datenbanken gegen ein entsprechendes Entgelt benutzen dürfen.

Obwohl enorme Informationsmengen elektronisch gespeichert und über Datennetze zugänglich sind, haben nur ausgewählte und äußerst begrenzte Personenkreise Zugriff auf derartige Informationsquellen. Für jemanden, der keinen derartigen Zugang zu diesen Informationsquellen besitzt, oder der sich in einem Bereich außerhalb seines Spezialgebietes informieren will, ist es somit kaum möglich, einen Überblick über die elektronisch abgespeicherte Information zu einem bestimmten, ihn interessierenden Thema zu erhalten.

Aus der DE 196 51 788 A1 geht ein Verfahren zur Datenermittlung und - aufbereitung in Informationsnetzwerken, wie z.B. dem Internet, hervor. Mit diesem Verfahren soll eine zielgenaue, zeitsparende Recherche nach beliebigen Informationen möglich sein. Dieses Verfahren zeichnet sich durch "intelligente" Suchmaschinen aus, die z.B. redundante Datensätze eliminieren, die Recherche abbrechen, wenn die Anzahl der Datensätze ein vorgeschriebenes Maximum übersteigt, oder es wird ein weiterer Recherchensuchlauf durchgeführt, falls die ermittelte Anzahl relevanter Datensätze größer als dieser Grenzwert ist, wobei durch den Nutzer oder das Rechercheprogramm ein weiteres relevantes Suchwort vorgegeben und ein zweiter Recherchendurchlauf gestartet wird. Bei diesem Verfahren werden die einzelnen Recherchendurchgänge interaktiv ausgeführt, wodurch der Benutzer jeweils in die Recherche eingreift.

In der DE 196 51 788 A1 ist ferner eine Lernmatrix mit synonymen Deskriptoren beschrieben, die im Falle einer ergebnislosen Recherche eine Suche nach inhaltsgleichen Deskriptoren ermöglichen. Der Benutzer wird bei diesem Verfahren beispielsweise durch automatisches Vorschlagen weiterer Suchbegriffe (Deskriptoren) automatisch unterstützt, um eine möglichst präzise Recherche auszuführen, wobei die vorgegebene Maximalgrenze an Datensätzen nicht überschritten werden soll.

Aus "Das Patent Informationssystem PATIS", Dr. Volker Hartung und Dr. Klaus Strößner, Deutschen Patent- und Markenamt, Mai 1994 geht ein Recherchensystem zum Recherchieren von Patenten hervor, das ein Datennetz, Datenendgeräte, wie z.B. Recherchestationen, Archivrechner, Steuerrechner usw. umfaßt. Bei diesem Recherchensystem können Eingabemasken zum Eingeben der gewünschten Suchbegriffe verwendet werden.

Aus der US-A-5,781,911 ist ein Verfahren und ein System zur Bereitstellung von Informationen bekannt. Verschiedene Softwaremodule arbeiten so zusammen, daß von einem Benutzer akualisierte Daten abgerufen werden können.

In der WO 99/05618 ist ein System und ein Verfahren beschrieben, bei dem auf Informationen in Dokumenten zugegriffen werden kann. Für den Zugriff werden die Sprachdaten in einer logischen Form aufbereitet, so daß eine automatisierte Recherche erleichtert ist.

In Schulungsunterlagen zum Patent Informationssystem DEPATIS, insbesondere Seite 51 und 53 sind Formulierungshilfen für das Auffinden von Suchbegriffen für die Datenbankrecherche beschrieben, mit welchen in entsprechende Eingabenmasken Suchbegriffe eingegeben werden können.

Der Erfindung liegt die Aufgabe zugrunde, eine Vorrichtung und ein Verfahren zum Verarbeiten und Drucken von Informationen zu schaffen, mit denen auch ein in Datenbankabfragen unerfahrener Benutzer sich einfach einen Überblick über die elektronisch gespeicherten Informationen zu einem bestimmten Thema verschaffen kann und die entsprechenden Informationen in Form eines Druckexemplars zur Verfügung gestellt werden.

Die Aufgabe wird durch eine Vorrichtung mit den Merkmalen des Anspruchs 1 und durch ein Verfahren mit den Merkmalen des Anspruchs 8 gelöst. Vorteilhafte Ausgestaltungen der Erfindung sind in Unteransprüchen angegeben.

Die erfindungsgemäße Vorrichtung zum Verarbeiten und Drucken von Informationen weist zumindest eine Informationsspeichereinrichtung, eine Rechercheneinrichtung zum Recherchieren der in der Informationsspeichereinrichtung gespeicherten Information und eine Druckeinrichtung auf, die alle über ein Datennetz miteinander verbunden sind, wobei die Rechercheneinrichtung ein Suchkriteriummodul zur Eingabe von Suchbegriffen und ein Druckexemplarumfangsmodul zum Festlegen des Umfangs des Druckexemplares aufweist, so daß eine Recherche nach Maßgabe der eingegebenen Suchbegriffe und des festgelegten Umfangs des Druckexemplars automatisch ausgeführt wird.

Da die Rechercheneinrichtung der erfindungsgemäßen Vorrichtung ein Suchkriteriummodul und ein Druckexemplarumfangsmodul besitzt, mit welchen vom Benutzer die Suchbegriffe und der Umfang des zu druckenden Druckexemplars festgelegt werden, wird von der Rechercheneinrichtung automatisch eine Recherche ausgeführt, die so viel Informationen sammelt, daß das Druckexemplar im vorbestimmten Umfang an der Druckeinrichtung gedruckt werden kann.

Dies ist ein wesentlicher Unterschied zu bekannten Informationssuchsystemen beziehungsweise Rechercheneinrichtungen, mit welchen zwar auch nach vorgegebenen Suchkriterien recherchiert werden kann, wobei der Umfang des Recherchenergebnisses jeweils alleine durch die vom Benutzer eingegebenen Suchkriterien bestimmt oder durch eine vorbestimmte Anzahl Recherchenteilergebnisse begrenzt wird, wobei der Umfang der einzelnen Recherchenteilergebnisse unbestimmt ist. Mit den bekannten Suchsystemen beziehungsweise Rechercheneinrichtungen sollen nach Maßgabe der eingegebenen Suchbegriffe möglichst alle entsprechenden Informationen ermittelt werden, das heißt, daß ein möglichst umfangreiches Recherchenergebnis erwünscht ist. Erfahrene Rechercheure können in einem interaktiven Prozeß durch geschicktes Ergänzen der Suchbegriffe die so ermittelte Datenmenge auf ein handhabbares Maß reduzieren, so daß das Recherchenergebnis sowohl vom Auftraggeber ausgewertet werden kann und einen gewissen Anspruch auf Vollständigkeit erfüllt.

Mit der Erfindung wird ein völlig anderer Weg eingeschlagen, denn mit der erfindungsgemäßen Vorrichtung soll nicht eine Recherche durchgeführt werden, die allen Ansprüchen auf Vollständigkeit genügt, sondern sie soll dem Benutzer, der in der Regel kein erfahrener Rechercheur ist, den Zugang zu elektronisch gespeicherten Informationen ermöglichen, diese in eine vom Benutzer verwertbaren Umfang und Form zusammenstellen und als Druckexemplar drucken, so daß der Benutzer die erhaltenen Informationen in gewohnter Weise auswerten kann, nämlich durch Lesen eines Druckexemplares, das in der Regel zu einem Heft beziehungsweise Buch gebunden ist. Diese Vereinfachung gegenüber den bekannten Rechercheneinrichtungen wird dadurch erzielt, daß der Benutzer lediglich einmal seine Suchbegriffe in das Suchkriteriummodul eingibt, und am Druckexemplarumfangsmodul den Umfang des Druckexemplars festlegt und die Rechercheneinrichtungen dann die Recherche selbständig durchführt, bis eine Informations- beziehungsweise Datenmenge im gewünschten Umfang vorliegt. Die Festlegung des Umfangs des Druckexemplars bedeutet, daß die zu recherchierende Datenmenge unabhängig von der Anzahl der einzelnen Recherchenteilergebnisse festgelegt ist. Hierdurch wird somit die gesamte mit einer Recherche zu ermittelnde Datenmenge festgelegt.

Zur Begrenzung der Datenmenge können unterschiedliche Methoden verwendet werden. Die einfachste Methode ist, daß der Recherchenvorgang nach Erhalt der vorbestimmten Datenmenge abgebrochen wird.

Eine weitere, bevorzugte Methode ist, daß ein sogenanntes Match-Kriterium ausgewertet wird, das mit einem Zahlenwert die Treffergenauigkeit der Suchbegriffe für die einzelnen Recherchenergebnisse angibt. Je höher der Zahlenwert des Match-Kriteriums ist, desto größer ist die Übereinstimmung der Suchbegriffe mit dem ermittelten Einzelergebnis, beziehungsweise desto öfter sind die vom Benutzer eingegebenen Suchbegriffe in dem jeweiligen Einzelergebnis genannt. In das Drukkexemplar werden dann die Einzelergebnisse mit dem jeweils höchsten Match-Kriterium aufgenommen und Einzelergebnisse mit geringerem Match-Kriterium werden überhaupt nicht berücksichtigt oder nicht als Text, sondern lediglich mit ihrem Titel und ihrer Fundstelle in entsprechende Listen aufgenommen.

Eine weitere, automatisierbare Methode zur Beeinflussung der ermittelten Informationsmenge ist, daß von der Rechercheneinrichtung automatisch festgestellt wird, ob die Datenmenge eines vorläufigen Recherchenergebnisses zu groß oder zu klein für den festgelegten Umfang des Druckexemplars ist, wobei bei einer zu kleinen Datenmenge automatisch mittels Synonymen zu den eingegebenen Recherchenkriterien eine weitere Recherche gestartet wird, die ein umfangreicheres Recherchenergebnis liefert, und bei zu großer Datenmenge des vorläufigen Recherchenergebnisses Mehrdeutigkeiten der Suchkriterien ausgeschlossen werden, wodurch die mit der Recherche erhaltene Datenmenge vermindert wird.

Die beiden letztgenannten Methoden können auch kombiniert angewandt werden.

Es sind auch andere Methoden zur Einflußnahme auf den recherchierten Informationsumfang möglich. Für die Erfindung ist wesentlich, daß auch einem im Recherchieren unerfahrenen Benutzer die von ihm nach Maßgabe seiner Suchkriterien gewünschten Informationen mit vorbestimmtem Umfang in gedruckter Form zur Verfügung gestellt werden, so daß er sie einfach auswerten kann.

Mit dem erfindungsgemäßen Verfahren zum Verarbeiten und Drukken von Informationen nach Anspruch 8 werden die in der beziehungsweise den Informationsspeichereinrichtungen gespeicherten Informationen sowohl nach Maßgabe vom Benutzer vorgegebener Suchbegriffe als auch nach Maßgabe eines vom Benutzer festgelegten Umfangs des Druckerzeugnisses recherchiert und ausgedruckt.

Mit dem erfindungsgemäßen Verfahren wird wie bei der oben erörterten erfindungsgemäßen Vorrichtung der Umfang des Recherchenergebnisses nach dem vom Benutzer festgelegten Umfang des Druckexemplares festgelegt, wodurch selbst für einen im Recherchieren unerfahrenen Benutzern möglich ist, eine handhabbare Datenmenge mittels ihrer vorgegebenen Suchkriterien zu ermitteln und auszudrucken.

Die Erfindung wird nachfolgend näher anhand von Ausführungsbeispielen und Anwendungsbeispielen und der Zeichnungen beschrieben, in denen zeigen:
- Fig. 1: ein erstes Ausführungsbeispiel der Vorrichtung zum Verarbeiten und Drucken von Informationen schematisch in einem Blockschaltbild,
- Fig. 2: ein zweites Ausführungsbeispiel der erfindungsgemäßen Vorrichtung zum Verarbeiten und Drucken von Informationen schematisch in einem Blockschaltbild,
- Fig. 3: das erfindungsgemäße Verfahren in einem Flußdiagramm,
- Fig. 4: das Recherchieren im Detail gemäß einer Ausführungsform in einem Flußdiagramm,
- Fig. 5: das Recherchieren im Detail gemäß einer weiteren Ausführungsform in einem Flußdiagramm,
- Fig. 6: ein Eingabefenster zum Eingeben der Suchbegriffe,
- Fig. 7: ein Eingabefenster zum Eingeben des Umfangs des Drukkexemplars,
- Fig. 8: ein Eingabefenster zum Eingeben der Gestaltung des Druckexemplars,
- Fig. 9: ein Eingabefenster zum Eingeben der zur Abrechnung notwendigen Informationen,
- Fig. 10: ein Eingabefenster zum Eingeben der Suchbegriffe nach einer weiteren Ausführungsform.

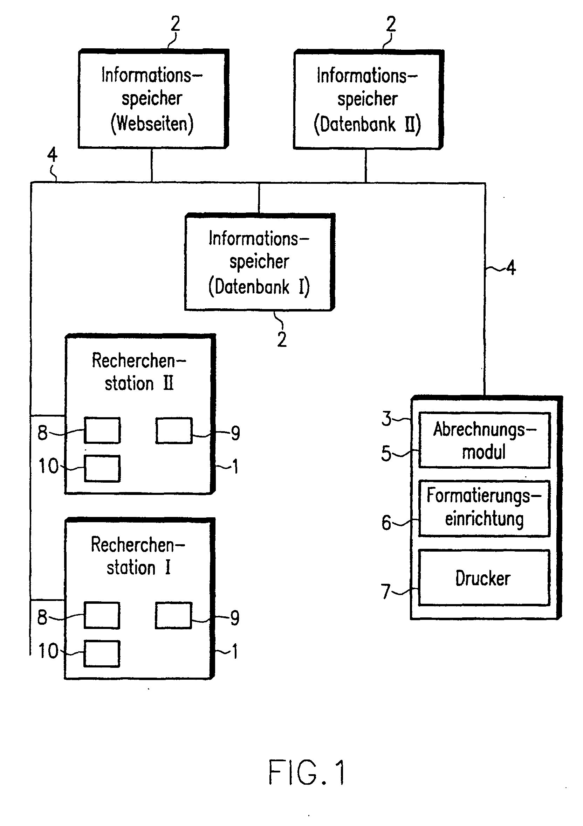

In Fig. 1 wird schematisch in einem Blockschaltbild ein Ausführungsbeispiel der erfindungsgemäßen Vorrichtung zum Verarbeiten und Drucken von Informationen gezeigt.

Diese Vorrichtung weist zwei Recherchenstationen 1, drei Informationsspeicher 2 und eine Druckstation 3 auf. Die Recherchenstationen 1, Informationsspeicher 2 und die Druckstation 3 sind über ein Datennetz 4 miteinander verbunden.

Das Datennetz 4 kann das Internet, ein Intranet oder zum Beispiel ein beliebiges Firmennetz (local area network,LAN; wide area network, WAN) sein, an dem ein oder mehrere Informationsspeicher angeschlossen sind.

Die Recherchenstationen 1 sind in der Regel an das Datennetz 4 angeschlossene Personalcomputer, auf welchen das Recherchenprogramm der erfindungsgemäßen Vorrichtung installiert ist.

Die Informationsspeicher sind mit dem Datennetz 4 verbundene Datenspeicher. Sie können die unterschiedlichsten Informationen beinhalten, wie zum Beispiel Webseiten und/oder Datenbanken. Da Webseiten hauptsächlich für Werbezwecke vorgesehen sind, sind sie zum Sammeln von Informationen nur bedingt geeignet. Der Informationsgehalt von Datenbanken ist in der Regel wesentlich größer. Es gibt für jedermann frei zugängliche Datenbanken. Die meisten Datenbanken können jedoch erst nach Abschluß eines Vertrages mit dem jeweiligen Datenbankanbieter benutzt werden. Derartige Datenbanken beinhalten zum Beispiel wissenschaftliche Artikel eines Fachgebietes, Patentinformationen, Artikel von Tageszeitungen oder Wirtschaftsdaten. Die Datenbanken, die die Artikel von Tageszeitungen beinhalten, haben gegenüber einer herkömmlichen Zeitung den Vorteil, daß man darin alle innerhalb eines größeren Zeitraums veröffentlichte Artikel recherchieren kann.

Die Druckstation 3 weist ein Abrechnungsmodul 5, eine Formatiereinrichtung 6 und einen Drucker 7 auf. Im übrigen kann die Druckstation 3 weitere Systemkomponenten eines PoD-Systems aufweisen, wie es in dem eingangs erwähnten Artikel "Entwicklung neuer Medien-Konzepte für PoD-Dienstleister" in der Zeitschrift Deutscher Drucker Nr. 35/98 vom 17.09.98 beschrieben ist. Der Inhalt dieser Veröffentlichung wird hiermit durch Bezugnahme in die vorliegende Beschreibung aufgenommen.

Der Betreiber der Druckstation 3, z.B. ein PoD-Dienstleister, hat mit den Informationsanbietern (Datenbankanbieter), die die Informationsspeicher betreiben, einen oder mehrere Verträge abgeschlossen, die ihm beziehungsweise den vom Betreiber der Druckstation 3 autorisierten Kunden die Benutzung der Datenbanken in den Informationsspeichern 2 erlaubt. Die entsprechenden Benutzungsentgelte bestimmen sich in der Regel nach der angefallenen Datenmenge und werden vom Betreiber der Druckstation an die Informationsanbieter abgeführt. Diese Gebühren finanziert der Betreiber der Druckstation durch den Verkauf der Druckexemplare an die Benutzer der Recherchenstationen 1. Mit dem Abrechnungsmodul 5 werden diese Abrechnungen vorgenommen, wie es unten näher erläutert wird.

Die vom Datennetz 4 an der Druckstation 3 eingehenden Informationen liegen, insbesondere wenn das Datennetz 4 das Internet ist, in unterschiedlichsten Formaten vor (zum Beispiel IETF, W3C, PostScript, PDF, MS Word, und so weiter), die von der Formatierungseinrichtung 6 in ein für den Drucker 7 geeignetes Format umgesetzt werden. Ferner kann die Formatierungseinrichtung 6 entsprechend den Wünschen des Benutzers der Recherchenstation 1 das Druckexemplar formatieren. Dies wird unten näher erläutert. Das Abrechnungsmodul 5 und die Formatierungseinrichtung 6 können als Softwaremodule auf einem in der Druckstation 3 integrierten Computer realisiert sein.

Als Drucker 7 wird beispielsweise ein duplexfähiger Digitaldrucker vorgesehen, der mit einer Einrichtung zum Binden des Druckexemplars versehen sein kann. Das Druckexemplar kann beispielsweise mittels einer Spiralbindung oder einer Klebebindung zusammengefaßt werden.

Für die Erfindung ist wesentlich, daß die Recherchenstation 1 zumindest ein Suchkriteriummodul 8 und ein Druckexemplarumfangsmodul 9 aufweist. Diese beiden Module 8, 9 können als an den Recherchenstationen 1 installierte Computerprogramme realisiert sein. Am Suchkriteriummodul 8 gibt ein Benutzer die jeweiligen Suchbegriffe ein, nach denen in den Informationsspeichern 2 recherchiert werden soll. Mit Hilfe des Druckexemplarumfangsmoduls 9 wird vom Benutzer der Umfang des Druckexemplares festgelegt, so daß von der Recherchestation eine Recherche automatisch ausgeführt werden kann, wobei deren Recherchenergebnis einen dem gewünschten Druckexemplar entsprechenden Umfang aufweist. Die Einstellung des Umfangs des Recherchenergebnisses wird unten näher erläutert.

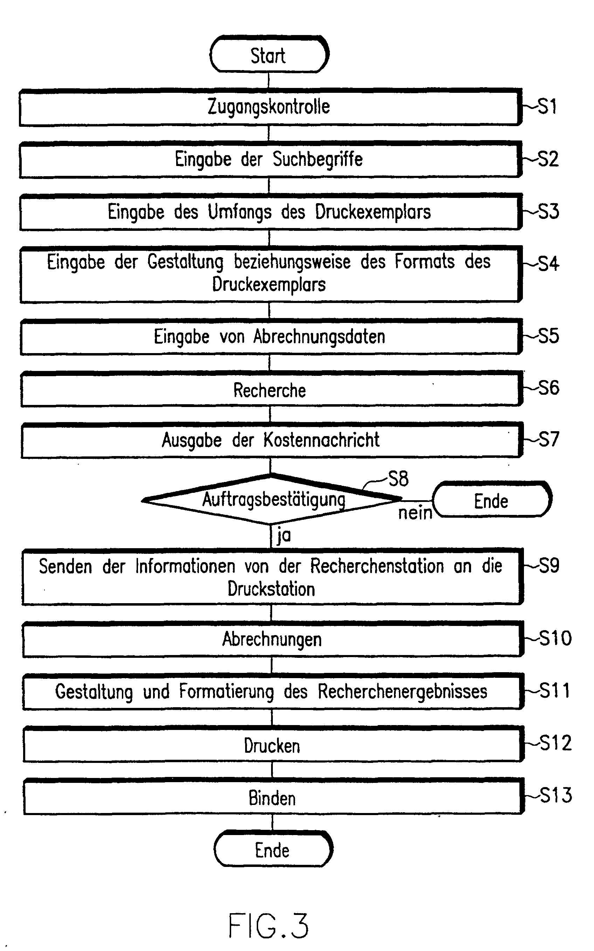

Die Recherchenstationen 1 weisen vorzugsweise noch weitere Module auf, wie zum Beispiel ein Gestaltungsmodul 10, mit dem der Benutzer die Formatierung und Gestaltung des Druckexemplars festlegen kann. Diese Module 8 bis 10 sind in das an der Recherchenstation 1 installierte Recherchenprogramm eingebettet, das die Recherche und die Weiterleitung des Recherchenergebnisses an die Druckstation 3 automatisch ausführt, wie es nachfolgend anhand der in den Fig. 3 bis 5 dargestellten Flußdiagramme erläutert wird.

In der Fig. 3 ist das Hauptprogramm der Recherchenstation 1 dargestellt. Nach dem Start des Programmes wird zunächst in einem Schritt S1 eine Zugangskontrolle ausgeführt, das heißt, der Benutzer hat eine ihm vom Betreiber der Druckstation 3 zugewiesene Benutzerkennung und ggf. ein von ihm selbst festgelegtes Paßwort einzugeben, wodurch er seine Berechtigung zur Benutzung der Recherchenstation 1 ausweist.

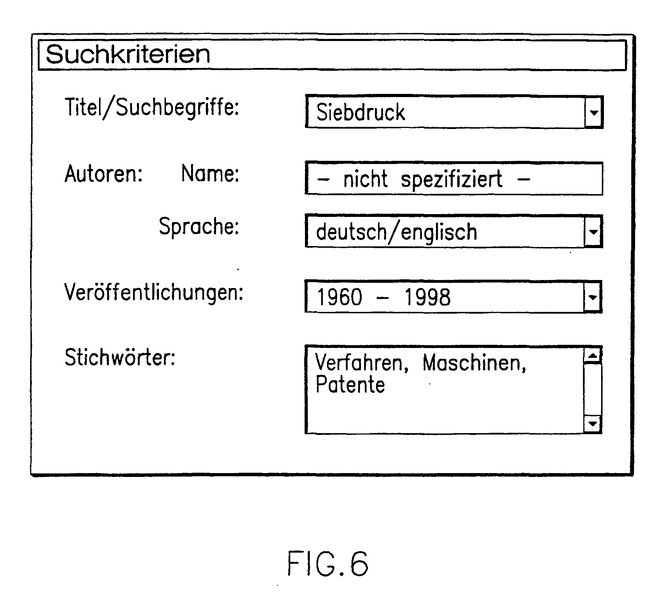

Nach Abschluß der Zugangskontrolle wird am Bildschirm der Recherchenstation 1 ein Eingabefenster zum Eingeben der Suchkriterien angezeigt. Ein solches Eingabefenster ist beispielsweise in Fig. 6 dargestellt. In diesem Eingabefenster kann der Benutzer einen zentralen Titel beziehungsweise Suchbegriff eingeben (Schritt S2), der im vorliegenden Beispiel "Siebdruck" ist. Dies bedeutet, daß der Benutzer nähere Informationen zum Thema "Siebdruck" wünscht.

Neben diesem zentralen Suchbegriff kann der Benutzer einen Autor beziehungsweise mehrere Autoren, die Sprache, die Veröffentlichungszeit und weitere Stichwörter eingeben. Bei dem in Fig. 6 gezeigten Beispiel wurde der Autor nicht spezifiziert, als Sprache Deutsch und Englisch und als Veröffentlichungszeitraum 1960 bis 1998 gewählt. Als weitere Stichwörter sind "Verfahren", "Maschinen", "Patente" eingegeben worden. Diese Suchbegriffe legen somit fest, daß der Benutzer zum Thema "Siebdruck" deutsche und englische Veröffentlichungen aus den Jahren 1960 bis 1998 will, die Verfahren, Maschinen und Patente betreffen.

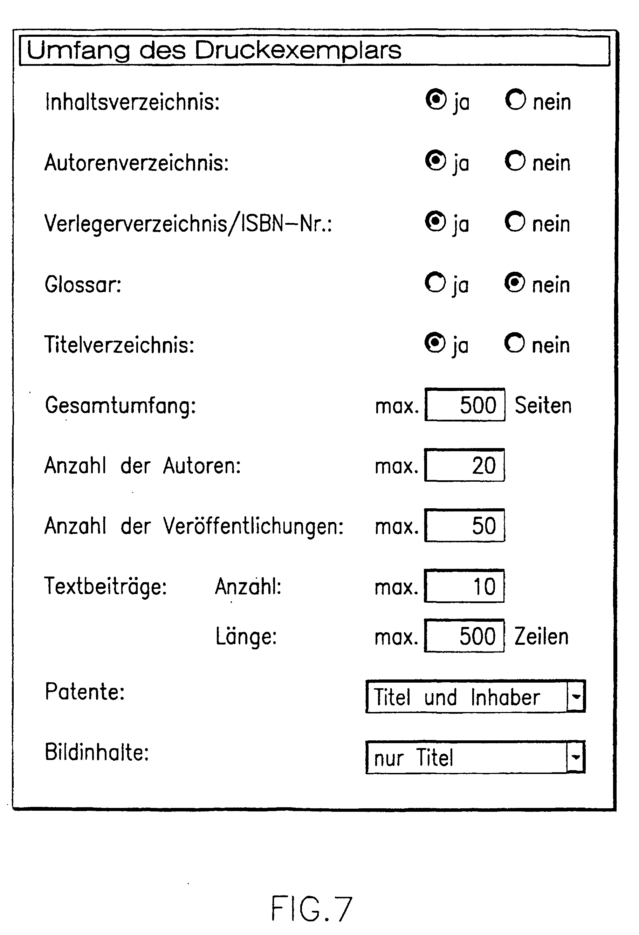

Im nächsten Schritt S3 gibt der Benutzer den Umfang des Drukkexemplars ein. Der Umfang des Druckexemplars kann einerseits durch eine physikalische Größe des Druckexemplares, wie zum Beispiel der maximalen Seitenzahl, festgelegt werden. Ergänzend oder alternativ hierzu kann der Umfang des Druckexemplares auch indirekt durch Festlegen der einzelnen zu druckenden Elemente bestimmt werden. Hierbei kann zum Beispiel die Anzahl der Textbeiträge und deren Länge definiert werden, oder angegeben werden, ob ein Inhaltsverzeichnis, ein Autorenverzeichnis, ein Verlegerverzeichnis/ISBN-Nummer, ein Glossar, ein Titelverzeichnis usw. im Druckverzeichnis aufgeführt werden soll. Ferner kann der Benutzer angeben, in welcher Art und Weise Spezialveröffentlichungen, wie zum Beispiel Patente, im Druckexemplar aufgenommen werden sollen oder ob Bildinhalte dargestellt werden sollen. Bei der in Fig. 7 gezeigten Eingabemaske hat der Benutzer folgende Auswahl vorgenommen: Die Anzahl der Autoren ist auf maximal zwanzig begrenzt; die Anzahl die Veröffentlichungen auf maximal fünfzig begrenzt; es sollen maximal zehn Textbeiträge mit einer maximalen Länge von fünfhundert Zeilen aufgenommen werden; von Patenten sollen nur der Titel und der Inhaber aufgenommen werden und von Bildern soll lediglich der Titel angegeben werden. Ferner soll ein Inhaltsverzeichnis, Autorenverzeichnis, Verlegerverzeichnis und ein Titelverzeichnis angelegt werden. Der Gesamtumfang ist auf maximal fünfhundert Zeilen begrenzt.

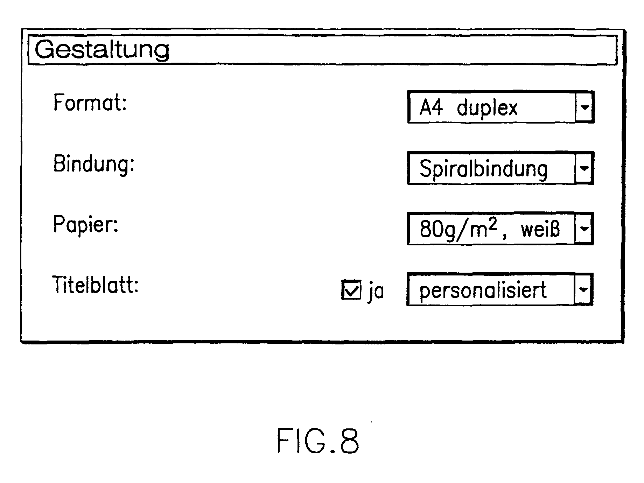

Im folgenden Schritt S4 gibt der Benutzer die Gestaltung beziehungsweise das Format des Druckexemplars ein. Ein entsprechendes Eingabefenster ist in Fig. 8 gezeigt. Der Benutzer kann hier das Format, die Bindung, das Papier bestimmen und festlegen, ob ein Titelblatt ausgegeben werden soll und welche Art von Titelblatt gewählt wird. Im vorliegenden Beispiel hat der Benutzer als Format DIN A 4 duplex, als Bindung Spiralbindung und als Papier 80 g/m², weiß gewählt. Ferner soll ein personalisiertes Titelblatt ausgegeben werden.

Mit dem Schritt S5 wird die Eingabe abgeschlossen. Im Schritt S5 gibt der Benutzer abrechnungsrelevante Daten, wie die Bestell- und Lieferadresse, den Liefertermin, eventuell ein Kostenlimit und die Art der Abrechnung ein. Im vorliegenden Fall ist die Adresse Hr. A. Mustermann, Beispielstraße 11, 4711 Musterstadt, als Liefertermin der 19.9.1998 und als Kostenlimit DM 100,-- eingegeben worden. Als Abrechnungsart wurde eine Zahlung mittels einer Kreditkarte 12345 gewählt.

Nach Abschluß der Eingabe geht der Programmablauf auf den nächsten Schritt S6 über, mit dem die Recherche automatisch ausgeführt wird. Hierbei wird ein Recherchenprogramm gestartet, das unten näher erläutert wird. Das Recherchenprogramm fragt anhand der vom Benutzer eingegebenen Suchbegriffe die einzelnen Informationsspeicher (Webseiten, Datenbanken, usw.) ab, indem die vom Benutzer eingegebenen Suchbegriffe mit einer entsprechenden logischen Verknüpfung (und, oder, nicht) an die einzelnen Informationsspeicher in einer für den jeweiligen Informationsspeicher lesbaren Form schickt. Die Informationsspeicher 2 durchsuchen ihren Datenbestand nach Erhalt dieser Suchbegriffe und senden an die die Suchbegriffe sendende Recherchenstation 1 jeweils die einzelnen Recherchenergebnisse zusammen mit einer entsprechenden Kosteninformation.

Im Schritt S7 werden die an der Recherchenstation 1 eingehenden Daten ausgewertet und der Benutzer erhält bei einer erfolgreichen Recherche, das heißt, daß ausreichend Informationen gefunden worden sind, eine Angabe über die Höhe der zu erwartenden Kosten für das Druckexemplar. Diese Kosten werden anhand der von den Informationsspeichern eingehenden Kosteninformationen berechnet, wobei die Kosten zum Erstellen und zum Ausliefern des fertigen Druckexemplares mit berücksichtigt werden.

Anschließend kann der Benutzer im Schritt S8 eine Auftragsbestätigung abgeben. Mit der Auftragsbestätigung wird an den Betreiber der Druckstation 3 der Auftrag erteilt, das recherchierte Druckexemplar zu drucken und auszuliefern. Da mit der Auftragsbestätigung S8 Kosten erzeugt werden, ist es zweckmäßig, diese mit einem Paßwort zu verknüpfen, so daß sichergestellt ist, daß von einem Unberechtigten kein entsprechender Druckauftrag erteilt werden kann. Wird keine Auftragsbestätigung eingegeben oder die Auftragsbestätigung verweigert, so wird der Programmablauf beendet.

Ist die Recherche nicht erfolgreich, das heißt, daß nicht ausreichend Informationen ermittelt worden sind, wird im Schritt S7 anstelle einer Kostennachricht die Mitteilung ausgegeben, daß die Recherche nicht erfolgreich war. Der Benutzer kann dann eine neue Recherche eingeben.

Wird im Schritt S8 die Auftragsbestätigung erteilt, so werden die recherchierten Informationen im Schritt S9 von der Recherchenstation 1 an die Druckstation 3 über das Datennetz 4 gesandt. Diese Informationen beinhalten alle vom im Druckexemplar zu druckenden Daten und die zur Abrechnung des Drukkexemplares notwendigen Daten, wie zum Beispiel Auftraggeber, Kosten für die Benutzung der Informationsspeicher, Zahlungsweise und dergleichen.

Mit dem Schritt S10 werden die Abrechnungen zwischen dem Betreiber der Druckstation und dem Betreiber der Informationsspeicher und die Abrechnung zwischen dem Betreiber der Druckstation und dem Benutzer anhand der übermittelten Abrechnungsdaten erstellt.

Danach werden die ermittelten Recherchenergebnisse im Schritt S11 in der gewünschten Art und Weise für das Druckexemplar formatiert und gestaltet. Dies umfaßt zum einen die Erzeugung von Verzeichnissen, wie zum Beispiel Inhaltsverzeichnis, Autorenverzeichnis, usw., die Anordnung der Textbeiträge und das Erzeugen eines Titelblattes, und zum anderen die Umwandlung der Druckformate, welche die an der Druckstation 3 eingehenden Daten aufweisen, in ein für den Drucker 7 geeignetes Format.

Im Schritt S12 wird das Druckexemplar gedruckt und im Schritt S13 gebunden. Hiermit ist das erfindungsgemäße Verfahren zum Verarbeiten und Drucken von Informationen abgeschlossen und das Druckexemplar kann an den Benutzer beziehungsweise Auftraggeber ausgeliefert werden. Bei einer weiteren Ausführungsform der Erfindung wird das Buch nach dem Binden in einer Packstation automatisch verpackt und an ein Versandsystem übergeben. Beim Verpacken wird die vom Benutzer eingegebene Lieferadresse automatisch als Versandadresse gedruckt.

Bei einer weiteren Abwandlung der Erfindung kann die im Buch abgedruckte Information (oder benutzerspezifisch anwählbare Anzeige davon) dem Benutzer vorab per e-mail zugesandt werden, so daß er einen ersten Eindruck von der ermittelten Information gewinnen kann.

Bei dem in den Zeichnungen dargestellten Anwendungsbeispielen erhält der Auftraggeber ein mit Spiralbindung im Duplex-Verfahren gedrucktes Buch zum Thema "Siebdruck", das Veröffentlichungen der Jahre 1960 bis 1998 in Deutsch und Englisch zu den Stichwörtern "Verfahren", "Maschinen" und "Patente" umfaßt. In dem Buch sind maximal zehn Textbeiträge mit einer maximalen Länge von fünfhundert Zeilen abgedruckt und maximal fünfzig Veröffentlichungen aufgenommen. Ferner enthält das Buch ein Inhaltsverzeichnis, ein Autorenverzeichnis, ein Verlegerverzeichnis und ein Titelverzeichnis. Der Leser dieses Buches kann sich somit einen ersten Überblick über die Entwicklung im Bereich des Siebdruckes in den Jahren von 1960 bis 1998 verschaffen. Da die Textbeiträge auf fünfhundert Zeilen begrenzt sind, sind sie in der Regel nicht vollständig abgedruckt. Anhand des Verlegerverzeichnisses kann die vollständige Veröffentlichung vom Leser einfach beschafft werden, falls er anhand der im individualisierten Buch angegebenen Textstelle feststellt, daß dieser Beitrag für ihn interessant ist.

Beim oben beschriebenen Verfahren werden bei der Durchführung der Recherche im Schritt S6 die Einzelergebnisse vollständig an die Recherchenstation 1 übermittelt. Bei einer hierzu alternativen Ausführungsform kann anstelle der vollständigen Übertragung der Einzelergebnisse lediglich eine Nachricht von den Informationsspeichern 2 an die Recherchenstation 1 übermittelt werden, die den Umfang des Recherchenergebnisses, eine entsprechende Kosteninformation und eventuell noch weitere das Recherchenergebnis charakterisierende Informationen, wie zum Beispiel ein Match-Kriterium, beinhaltet, ohne daß die eigentliche übermittelte Information übersandt wird. Bei dieser Abwandlung des Verfahrens werden die vollständigen Informationen bzw. Druckinformationen erst nach Erteilung der Auftragsbestätigung S8 im Schritt S9 direkt von den Informationsspeichern 2 an die Druckstation 3 gesandt. Bei diesem Verfahren geben die Informationsspeicher 2 die vollständige Information somit erst ab, nachdem die Auftragsbestätigung im Schritt S8 erteilt worden ist.

Dieses Verfahren ist insbesondere bei einer Benutzung von Datenbanken zweckmäßig, bei denen die Gebühren mit Herausgabe der Informationen fällig werden, da diese hier lediglich abgerufen werden, wenn eindeutig feststeht, daß das Druckexemplar gedruckt wird. Die im Schritt S6 zu erfolgende Einstellung des Recherchenumfangs auf den vom Benutzer festgelegten Umfang des Druckerzeugnisses erfolgt am einfachsten, durch nicht-Berücksichtigen der eingehenden Informationen, nach dem der maximale Recherchenumfang beziehungsweise der maximale Umfang für das Druckerzeugnis ausgeschöpft ist.

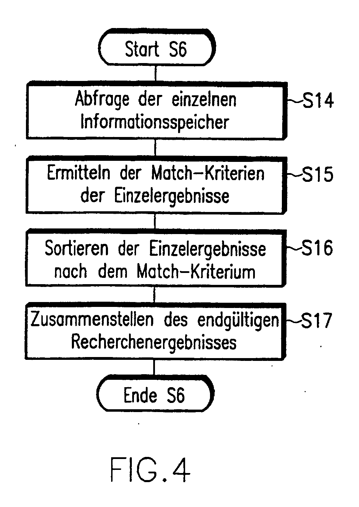

Anstelle einer solchen einfachen Methode, bei der oftmals wichtige Information nicht berücksichtigt werden, kann eine Begrenzung des Recherchenumfangs gemäß dem in Fig. 4 gezeigten Recherchenprogramms erfolgen. Dieses Recherchenprogramm ist ein Unterprogramm zu dem in Fig. 3 gezeigten Hauptprogramm, das im Schritt S6 aufgerufen wird.

Mit diesem Unterprogramm werden zunächst im Schritt S14 die einzelnen Informationsspeicher gemäß den vom Benutzer eingegebenen Suchbegriffen abgefragt. Die von den Informationsspeichern 2 an die Recherchenstation 1 zurückgesandten Einzelergebnisse werden im Schritt S15 ausgewertet und es wird ein "Match-Kriterium" der Einzelergebnisse bestimmt. Das Match-Kriterium gibt die Treffergenauigkeit an, das heißt, der Zahlenwert des Match-Kriteriums ist proportional zu der Anzahl der in den Einzelergebnissen enthaltenen Suchbegriffe beziehungsweise proportional zu der Anzahl der Häufigkeit der Suchbegriffe in den Einzelergebnissen.

Die Einzelergebnisse werden im Schritt S16 nach dem Match-Kriterium sortiert. Im Schritt S17 wird das Recherchenendergebnis zusammengestellt, wobei die Einzelergebnisse mit dem besten Match-Kriterium ausgewählt werden, bis der durch den festgelegten Umfang des Druckexemplares vorgegebene Recherchenumfang vollständig erschöpft ist. Das Recherchenendergebnis enthält somit die Einzelergebnisse, die am besten zu den vorgegebenen Suchbegriffen passen. Hierdurch werden nur die weniger zutreffenden Einzelergebnisse aussortiert und die besser zutreffenden Einzelergebnisse im Druckexemplar ausgedruckt.

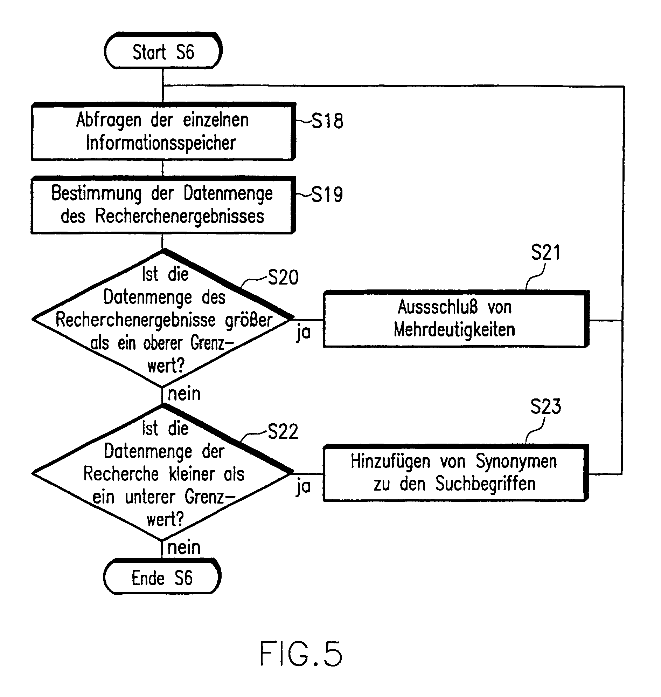

Fig. 5 zeigt ein weiteres Flußdiagramm eines Recherchenprogrammes, das anstelle oder in Kombination mit dem in Fig. 4 gezeigten Recherchenprogramm ausgeführt werden kann. Dieses Recherchenprogramm wird wiederum als Unterprogramm im Schritt S6 des Hauptprogrammes aufgerufen. Zunächst werden wieder die einzelnen Informationsspeicher im Schritt S18 nach den vom Benutzer vorgegebenen Suchbegriffen abgefragt. Im Schritt S19 wird die Größe, das heißt die Datenmenge, aller der im Schritt S18 ermittelten Einzelergebnisse bestimmt.

Im Schritt S20 wird bestimmt, ob die ermittelte Datenmenge größer als ein oberer Grenzwert des Recherchenumfangs ist. Der obere Grenzwert des Recherchenumfangs ergibt sich aus dem festgelegten Umfang des Druckexemplares. Ist die Datenmenge der ermittelten Recherchenergebnisse größer als der obere Grenzwert, so geht der Programmablauf auf den Schritt S21 über, mit dem Mehrdeutigkeiten in den Suchbegriffen ausgeschlossen werden. Ist einer der Suchbegriffe zum Beispiel "Bank", so kann dieser Suchbegriff mit weiteren für "Finanzdienstleister" typischen Begriffen verknüpft werden, so daß sichergestellt ist, daß das Recherchenergebnis keine "Bank" im Sinne einer Parkbank oder dergleichen enthält. Mit den derart modifizierten Suchbegriffen werden die Informations-speicher erneut abgefragt, das heißt der Programmablauf geht zurück auf den Schritt S18.

Ergibt sich bei der Bestimmung, ob die Datenmenge der bei der Recherche ermittelten Recherchenergebnisse nicht größer als der obere Grenzwert ist, so geht der Programmablauf auf den Schritt S22 über, in dem abgefragt wird, ob die Datenmenge der Recherchenergebnisse kleiner als ein durch den Umfang des Druckexemplares festgelegter unterer Grenzwert des Recherchenumfangs ist. Ergibt sich bei der Abfrage im Schritt S22, daß die Datenmenge der Recherchenergebnisse kleiner als dieser untere Grenzwert ist, so geht der Programmablauf auf den Schritt S23 über, bei dem den Suchbegriffen Synonyme hinzugefügt werden. Hierdurch wird die Anzahl der Suchbegriffe erweitert und die gesamte Recherche auf eine breitere Basis gestellt. Mit diesen erweiterten Suchbegriffen werden erneut die Informationsspeicher abgefragt, das heißt, daß der Programmablauf auf den Schritt S18 zurückgeht.

Wird im Schritt S22 ermittelt, daß die Datenmenge des Recherchenergebnisses größer als der untere Grenzwert des durch den festgelegten Umfang des Druckexemplares bestimmten Recherchenumfanges ist, bedeutet dies, daß die Datenmenge des Recherchenergebnisses im gewünschten Bereich liegt, so daß dieses Recherchenprogramm beendet wird.

Durch den Ausschluß von Mehrdeutigkeiten im Schritt 21 können Einzelergebnisse einer Recherche eliminiert werden, wodurch sich der Umfang der Recherche vermindert. Durch das Hinzufügen von Synonymen zu den Suchbegriffen können weitere gewünschte Einzelergebnisse ermittelt werden, wodurch die Datenmenge des Recherchenergebnisses vergrößert wird. Durch den Ausschluß von Mehrdeutigkeiten wird somit die Datenmenge verringert und durch das Hinzufügen von Synonymen vergrößert. Hierdurch kann das Recherchenergebnis automatisch auf eine gewünschte Datenmenge eingestellt werden. Vorzugsweise decken die in den Schritten S20 und S22 angewandten Grenzwerte einen bestimmten Bereich ab, wobei der untere Grenzwert des Schrittes S22 beispielsweise 10% kleiner als der obere Grenzwert des Schrittes S20 ist.

Die in den Fig. 4 und 5 dargestellten Recherchenprogramme erhöhen die Qualität der Recherche erheblich, ohne daß der Benutzer interaktiv in die Recherche eingreifen muß. Die einzige Interaktion, die der Benutzer durchführen muß, ist die Erteilung der Auftragsbestätigung im Schritt S8. Hierdurch wird auch einem an sich im Recherchieren unerfahrenen Benutzer ermöglicht, eine Recherche in ansprechender Qualität in unterschiedlichen Informationsspeichern, insbesondere in unterschiedlichen Datenbanken, auszuführen, wobei gleichzeitig das Recherchenergebnis in übersichtlicher und für den Benutzer gut auswertbarer Form als Druckexemplar ausgegeben wird. Der Benutzer benötigt hierzu weder allgemeine Erfahrungen zum Recherchieren, noch Kenntnisse von den einzelnen Datenbanken, die bei einer manuellen Recherche notwendig sind. Das erfindungsgemäße Verfahren erlaubt somit einfach eine Zusammenstellung individualisierter Informationen und Drucken dieser Informationen zu einem Druckexemplar, wie zum Beispiel einem klebegebundenen Buch.

Das erfindungsgemäße Verfahren und die erfindungsgemäße Vorrichtung werden vorzugsweise zum Erstellen von individualisierten Sachbüchern angewandt, da hierzu bereits ein umfangreicher Datenbestand elektronisch gespeichert und über Datennetze abrufbar ist.

Die Erfindung ist jedoch nicht auf diese Anwendung beschränkt, sondern es können auch Leseproben z.B. aus dem Bereich Belletristik individuell zusammengestellt und abgedruckt werden.

Ein weiterer Anwendungsbereich ist zum Beispiel die Zusammenstellung eines individualisierten Reiseführers. Einen solchen Reiseführer kann man zum Beispiel erstellen, indem man bei Suchkriterien als Hauptsuchbegriff das Reisegebiet und als weitere Stichwörter die entsprechenden Interessen, wie zum Beispiel im Bereich Kultur, Sport usw. eingibt. Bei der Zusammenstellung eines solchen Reiseführers kann es zweckmäßig sein, daß in den Suchkriterien eine Abfragemöglichkeit für sogenannte "1-Mal"-Informationen geschaffen wird, das heißt für Informationen, die lediglich ein einziges Mal angefordert werden, wie zum Beispiel eine Landkarte des Reiseziels. Das mehrfache Abdrucken dieser Informationen, auch wenn sie aus unterschiedlichen Informationsspeichern stammen, ist in der Regel unerwünscht, da der Benutzer z.B. lediglich eine einzige Landkarte benötigt. Weitere typische 1-Mal-Informationen sind z.B. eine Liste physikalischer Größen oder eine Standardtabelle.

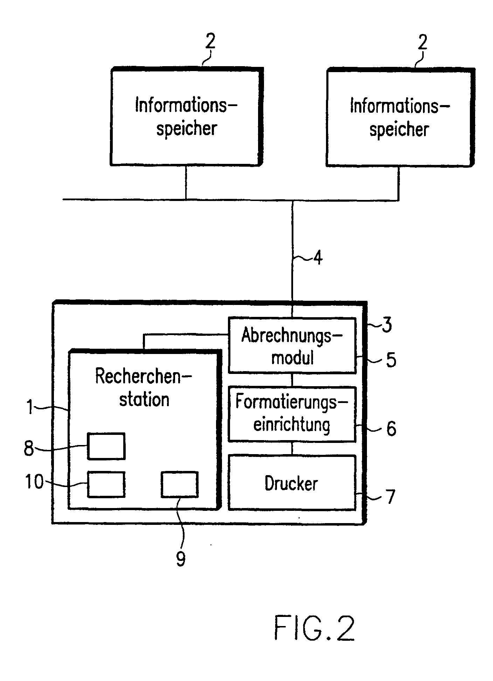

Die Erfindung ist nicht auf die oben beschriebenen Ausführungsbeispiele beschränkt. Im Rahmen der Erfindung ist es zum Beispiel möglich, eine einzige Recherchenstation 1 vorzusehen, die in der Druckstation 3 angeordnet ist (Fig. 2). Eine solche Anordnung ist dann zweckmäßig, wenn der Betreiber der Druckstation zugleich für seine Kunden als Dienstleistung die Recherche durchführt, das heißt die zur Durchführung der Recherche notwendigen Eingaben vornimmt.

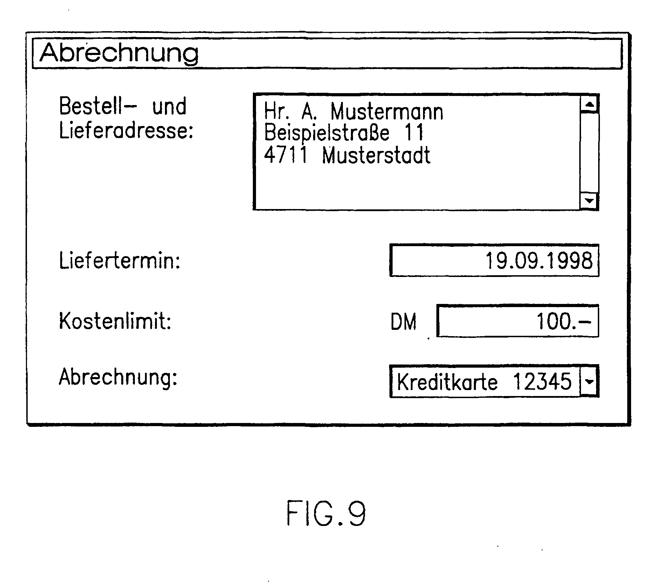

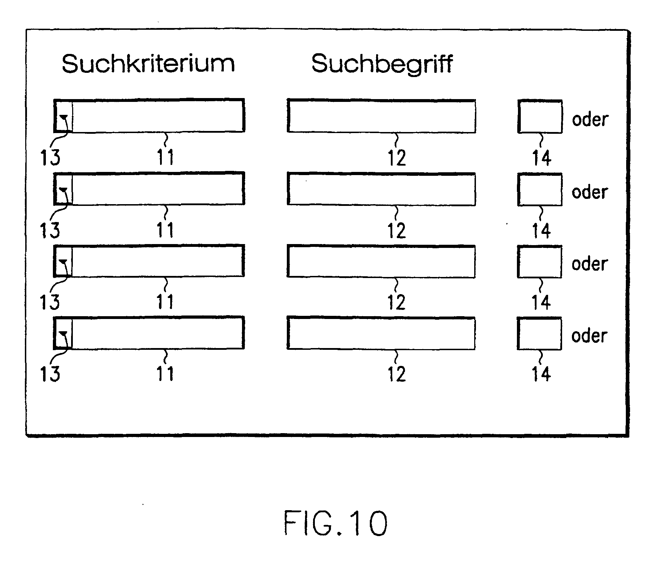

Die Erfindung ist auch nicht auf die in den Fig. 6 bis 9 gezeigten Eingabemasken beschränkt. In Fig. 10 ist zum Beispiel eine weitere Eingabemaske zum Eingeben der Suchkriterien und Suchbegriffe dargestellt. Diese Eingabemaske weist Felder 11 für Suchkriterien und Felder 12 für Suchbegriffe auf. Jeweils ein Feld 11 für ein Suchkriterium ist einem Feld 12 für einen Suchbegriff zugeordnet. Bei der in Fig. 10 dargestellten Eingabemaske sind jeweils vier Felder 11 für Suchkriterien und vier Felder für Suchbegriffe 12 vorgesehen. Am linken Rand der Felder 11 für die Suchkriterien sind dreieckförmige Zeiger 13 vorgesehen, mit welchen Listen der möglichen Suchkriterien aufgerufen werden können. Diese Listen von Suchkriterien umfassen zum Beispiel die Suchkriterien Titel, zentraler Suchbegriff, Autor, Sprache, Veröffentlichungsdatum, Stichworte, usw. Mit den Feldern 11 können somit die Suchkriterien festgelegt werden, wozu dann in den Feldern 12 die einzelnen Suchbegriffe eingegeben werden. Die in den Feldern 12 eingegebenen Suchbegriffe sind grundsätzlich mit einem logischen "und" verknüpft. Manchmal kann es jedoch. zweckmäßig sein, zwei oder mehrere Suchbegriffe mit einem logischen "oder" zu verknüpfen. Hierfür ist ein weiteres Feld 14 vorgesehen, in das die Nummer des anderen Suchbegriffes eingetragen wird, mit dem der jeweilige Suchbegriff mit einem "oder" verknüpft werden soll. Diese Art von Eingabemaske ist sehr flexibel und kann bei allen Anwendungsbeispielen der vorliegenden Erfindung eingesetzt werden. Dabei ist klar, daß auch andere an sich bekannte logische Verknüpfungen wie z.B. "NEAR" verwendbar sind.

Bei der obigen Beschreibung der erfindungsgemäßen Ausführungsbeispiele ist die Beschreibung von Programmodulen, die für einen Fachmann selbstverständlich vorhanden sein müssen, weggelassen worden, wie z.B. ein Programmodul, das die Verbindung zwischen dem Datennetz 4 und den einzelnen Stationen 1 bis 3 herstellt.

Die Anwendungsbereiche der vorliegenden Erfindung können in vielfältiger Weise abgewandelt werden. So ist es z.B. möglich, daß die erfindungsgemäß hergestellten individualisierten Druckerzeugnisse durch Einfügen von Werbeanzeigen in das Druckexemplar finanziert werden. Für persönliche Notizen können z.B. Leerseiten oder Leerspalten zum Drucktext automatisch hinzugefügt werden.

Statt oder zusätzlich zu den oben beschriebenen Suchkriterien (siehe z.B. Fig. 6) können auch andere Suchkriterien angeboten und ausgewählt werden, beispielsweise die Art von Veröffentlichungen wie Nachrichten, Business-Reports, Studien, wissenschaftliche Veröffentlichungen, Konferenz-Berichte, Zeitschriftenartikel, Bücher, Broschüren, Patent-Offenlegungsschriften (A), Patent-Erteilungsschriften (C) und/oder andere geeignete Veröffentlichungsarten. Des weiteren kann vorgesehen werden, daß aufeinanderfolgende Suchen ein- und desselben Benutzers von der Recherchenvorrichtung bzw. von dem Recherchenprogramm (Software) ausgewertet werden und daß dem Bediener in nachfolgenden Recherchen Hinweise zum Aufbau seiner Recherchenanfrage gegeben werden. Ein einfaches Beispiel für eine solche Unterstützung ist das Abspeichern aller früheren Recherchenprofile und das Anbieten dieser früheren Profile bei einer neuen Recherche. Die Unterstützung kann soweit gehen, daß das Recherchenprogramm die Recherchenkriterien beim Benutzer interaktiv abfragt, wobei in Abhängigkeit einer Eingabe weitere Abfragen erfolgen. Wird beispielsweise nach der Literaturart "Patentveröffentlichung" gesucht, so kann interaktiv abgefragt werden, ob nach "erteilten Patenten" nach "offengelegten Patentanmeldungen" oder "unspezifiziert" gesucht werden soll.

Das erfindungsgemäße Verfahren kann weiterhin durch ein Recherchen-Expertensystem unterstützt werden, welches wiederum ein eigenständiges Programm (Software) umfaßt sowie eine Spezialdatenbank. Das Expertensystem kann insbesondere zum Ausschluß der in Figur 5 beschriebenen Mehrdeutigkeiten (Schritt S21) herangezogen werden. Wird in dem oben beschriebenen Beispiel nach Banken im Sinne von Finanzdienstleistern abgefragt, so zieht das Expertensystem beispielsweise typische Finanzausdrücke heran, wie "Geld", "Börse", "Aktie". Enthält eine Veröffentlichung wenigstens einen der gespeicherten typischen Begriffe, so wird die Veröffentlichung ausgewählt, anderenfalls wird sie verworfen.

Neben solchen themenspezifischen im Expertensystem hinterlegten Begriffen können weitere logische Überprüfungen der Artikel erfolgen, beispielsweise vom Expertensystem automatisch bestimmte Informationsspeicher (Datenbanken) ausgewählt werden, die für den vom Benutzer optimal eingegebenen Themenkomplex (z.B. Finanzdienstleistungen oder Reisen oder Elektrotechnik oder Maschinenbau oder Druckgeräte) als relevant hinterlegt sind.

Die beschriebenen Software-Programme der Erfindung können auf an sich bekannten Datenträgern wie Disketten, Magnetbändern, CD-Roms, ROM-Speichern, EPROM-Speichern oder dergleichen gespeichert sein oder auch als Dateien von solchen Speichern, z.B. von einer Festplatte, über ein Datennetz (z.B. über das Internet) auf ein anderes Speichermedium überspielt werden.

Die Erfindung kann folgendermaßen kurz zusammengefaßt werden: Sie betrifft eine Vorrichtung und ein Verfahren, mit welchen individualisierte Druckerzeugnisse erzeugt und gedruckt werden können.

Die Erfindung erlaubt einen im Recherchieren unerfahrenen Benutzer die Zusammenstellung von Informationen nach persönlichen Suchbegriffen, wobei die hierbei ermittelte Informationsmenge automatisch an den vom Benutzer vorab festgelegten Umfang des Druckerzeugnisses angepaßt wird. Der Benutzer kann somit, ohne sich eingehend mit einem Recherchenalgorithmus oder Datenbankstrukturen auseinandersetzen zu müssen, sich ein persönliches Buch mit mehreren Leseproben zusammenstellen.

Die Erfindung ist insbesondere zur Anwendung im Sachbuchbereich vorgesehen, da wissenschaftliche Daten bereits in großem Umfang in elektronisch lesbaren Datenbanken gespeichert sind. Weitere Anwendungen der Erfindung sind die Zusammenstellung von Leseproben im Bereich der Belletristik oder die Erzeugung eines persönlichen Reiseführers.

### Bezugszeichenliste

- 1: Recherchenstation
- 2: Informationsspeicher
- 3: Druckstation
- 4: Datennetz
- 5: Abrechnungsmodul
- 6: Formatierungseinrichtung
- 7: Drucker
- 8: Suchkriteriummodul
- 9: Druckexemplarumfangsmodul
- 10: Gestaltungsmodul
- 11: Feld für Suchkriterium
- 12: Feld für Suchbegriff
- 13: Zeiger
- 14: Feld für oder-Verknüpfung

### Verfahrensschritte

- S1: Zugangskontrolle
- S2: Eingabe der Suchbegriffe
- S3: Eingabe des Umfangs des Druckexemplars
- S4: Eingabe der Gestaltung beziehungsweise des Formats des Druckexemplars
- S5: Eingabe von Abrechnungsdaten
- S6: Recherche
- S7: Ausgabe der Kostennachricht
- S8: Auftragsbestätigung
- S9: Senden der Informationen von der Recherchenstation an die Druckstation
- S10: Abrechnungen
- S11: Gestaltung und Formatierung des Recherchenergebnisses
- S12: Drucken
- S13: Binden
- S14: Abfrage der einzelnen Informationsspeicher
- S15: Ermitteln der Match-Kriterien der Einzelergebnisse
- S16: Sortieren der Einzelergebnisse nach dem Match-Kriterium
- S17: Zusammenstellen des endgültigen Recherchenergebnisses
- S18: Abfragen der einzelnen Informationsspeicher
- S19: Bestimmung der Datenmenge des Recherchenergebnisses
- S20: Ist die Datenmenge des Recherchenergebnisses größer als ein oberer Grenzwert?
- S21: Ausschluß von Mehrdeutigkeiten
- S22: Ist die Datenmenge der Recherche kleiner als ein unterer Grenzwert?
- S23: Hinzufügen von Synonymen zu den Suchbegriffen

## Patentansprüche

1. Vorrichtung zum Verarbeiten und Drucken von Informationen mit
- einer oder mehrerer Informationsspeichereinrichtungen (2),
- zumindest einer Rechercheneinrichtung (1) zum Recherchieren der in der beziehungsweise den Informationsspeichereinrichtungen (2) gespeicherten Informationen,
- einer Druckeinrichtung (3) zum Drucken eines Druckexemplares, das die von der Rechercheneinrichtung (1) ermittelten Informationen enthält, wobei
die Informationsspeichereinrichtung(en) (2), die Rechercheneinrichtung (1) und die Druckeinrichtung (3) über ein Datennetz (4) miteinander verbunden sind, und
die Rechercheneinrichtung (1) ein Suchkriteriummodul (8) zur Eingabe von Suchbegriffen und ein Druckexemplarumfangsmodul (9) zum Festlegen des Umfangs des Druckexemplars aufweist, so daß die Recherche nach Maßgabe der eingegebenen Suchbegriffe und des vorgegebenen Umfangs des Druckexemplars ausführbar ist.

2. Vorrichtung nach Anspruch 1, wobei eine Formatierungseinrichtung (6) zum Formatieren der mit der Rechercheneinrichtung (1) ermittelten Information zum Ausdruck an der Druckeinrichtung (7).

3. Vorrichtung nach Anspruch 2, wobei die Druckeinrichtung als Druckstation (3) ausgebildet ist, in der die Formatierungseinrichtung (6) und ein Drucker (7) integriert sind.

4. Vorrichtung nach Anspruch 3, wobei die Druckstation (3) ein Abrechnungsmodul (5) zum Abrechnen der Benutzungsentgelte zum Benutzen der Informationsspeicher aufweist.

5. Vorrichtung nach einem der Ansprüche 1 bis 4, wobei das Datennetz (4), das Internet oder ein Intranet ist.

6. Vorrichtung nach einem der Ansprüche 1 bis 4, wobei das Datennetz (4) ein Area-Network ist.

7. Vorrichtung nach einem der Ansprüche 1 bis 6, wobei zumindest einer der Informationsspeicher (2) eine Datenbank beinhaltet.

8. Verfahren zum Verarbeiten und Drucken von Informationen, das folgende Schritte umfaßt:
- Recherchieren der Informationen an einer Recherchenstation (1), die über ein Datennetz (4) mit einer oder mehreren Informationsspeichereinrichtungen (2) verbunden ist,
- Formatieren der recherchierten Informationen in einer für eine Druckeinrichtung (3) geeigneten Form,
- Drucken der Informationen an der Druckeinrichtung (3) zu einem Druckerzeugnis, wobei
die in der Informationsspeichereinrichtung (2) oder in den Informationsspeichereinrichtungen (2) gespeicherten Informationen nach Maßgabe vom Benutzer vorgegebenen Suchbegriffen als auch nach einem vom Benutzer festgelegten Umfang des Druckerzeugnisses recherchiert werden.

9. Verfahren nach Anspruch 8, wobei nach Maßgabe des festgelegten Umfangs des Druckerzeugnisses ein unterer und ein oberer Grenzwert für die zu recherchierende Datenmenge festgelegt wird, und
die recherchierte Datenmenge so eingestellt wird, daß sie innerhalb der beiden Grenzwerte liegt.

10. Verfahren nach Anspruch 9, wobei der untere Grenzwert etwa 10% bis 20% kleiner als der obere Grenzwert ist.

11. Verfahren nach Anspruch 8 oder 10, wobei nach Durchführung der Recherche an der Recherchenstation (1) eine Kostennachricht über die zu erwartenden Kosten des Drukkexemplars ausgegeben wird (S7), worauf der Benutzer eine Auftragsbestätigung erteilen kann (S8).

12. Verfahren nach einem der Ansprüche 8 bis 11, wobei das Druckexemplar gebunden wird (S13).

13. Verfahren nach einem der Ansprüche 8 bis 12, wobei der durch den Umfang des Druckerzeugnisses festgelegte Recherchenumfang derart eingestellt wird, daß nach vollständiger Ausschöpfung des Recherchenumfanges weiterhin ermittelte Recherchenergebnisse nicht berücksichtigt werden.

14. Verfahren nach einem der Ansprüche 8 bis 13, wobei beim Recherchenvorgang Match-Kriterien der Einzelergebnisse ermittelt werden, die proportional zur Treffergenauigkeit sind, wobei bei der Zusammenstellung des endgültigen Recherchenergebnisses die Einzelergebnisse mit einem niedrigen Match-Kriterium nicht berücksichtigt werden.

15. Verfahren nach einem der Ansprüche 8 bis 14, wobei beim Recherchenvorgang automatisch zur Erzielung einer Recherche mit kleiner Datenmenge Mehrdeutigkeiten der Suchbegriffe ausgeschlossen werden, oder zur Erzielung einer größeren Datenmenge des Recherchenergebnisses Synonyme der Suchbegriffe berücksichtigt werden.

16. Verfahren nach einem der Ansprüche 8 bis 15, wobei nach einer Abfrage der Informationsspeicher mit den vorgegebenen Suchbegriffen die ermittelten Recherchenergebnisse von den Informationsspeichern vollständig an die Recherchenstation (1) geschickt werden, von der die Abfrage erzeugt wurde.

17. Verfahren nach Anspruch 16, wobei die Recherchenergebnisse in der Recherchenstation (1) ausgewertet werden, das heißt, daß zum Beispiel ihre Datenmenge, die Match-Kriterien und dergleichen bestimmt werden.

18. Verfahren nach einem der Ansprüche 8 bis 15, wobei nach der Abfrage der einzelnen Informationsspeichereinrichtungen (2) mittels der vom Benutzer vorgegebenen Suchbegriffe die Informationsspeichereinrichtung (2) eine Nachricht an die Recherchenstation (1) senden, von der die Recherche erzeugt worden ist, wobei die Nachricht eine Angabe über die ermittelte Datenmenge, die zur erwartenden Kosten und/oder ein Match-Kriterium zu den Einzelergebnissen beinhaltet, aber die zu druckende Information darin nicht enthalten ist.

19. Verfahren nach Anspruch 18, wobei nach Erteilung einer Auftragsbestätigung (S8) die Druckinformationen direkt von der Informationsspeichereinrichtung (2) an die Drukkeinrichtung (3) gesandt werden.

20. Verfahren nach einem der Ansprüche 8 bis 19, wobei zum Eingeben der Suchbegriffe eine Eingabemaske an der Rechechenstation (1) angezeigt wird, die mehrere Paare von Feldern aufweist, wobei in einem Feld der Paare von Feldern das Suchkriterium eingegeben werden kann, und im anderen der beiden Felder der Suchbegriff zu dem eingegebenen Suchkriterium eingegeben werden kann.

21. Verfahren nach Anspruch 20, wobei die Felder der Suchbegriffe grundsätzlich mit einer logischen "und"-Verknüpfung verknüpft sind, und zumindest ein weiteres Feld vorgesehen ist, mit dem die logische "und"-Verknüpfung in eine logische "oder"-Verknüpfung abgeändert werden kann.

## Claims

1. Device for processing and printing information, comprising:
- one or more information storage devices (2),
- at least one search device (1) for searching information stored in the information storage device or devices (2),
- a printer device (3) for printing a printed copy that contains the information identified by the search device (1), wherein
the information storage device(s) (2), the search device (1) and the printer device (3) are connected to one another via a data network (4), and
the search device (1) comprises a search criterion module (8) for the input of search terms and a print copy scope module (9) for defining the scope of the print copy, so that the search can be implemented according to the criterion of the search terms that have been input and the given scope of the print copy.

2. Device according to claim 1, wherein a formatting device (6) for formatting the information identified with the search device (1) for printout at the printer device (7).

3. Device according to claim 2, wherein the printer device is fashioned as a printing station (3) in which the formatting device (6) and a printer (7) are integrated.

4. Device according to claim 3, wherein the printing station (3) comprises an accounting module (5) for billing the usage fees for the use of the information stores.

5. Device according to one of the claims 1 to 4, wherein the data network (4) is the Internet or an Intranet.

6. Device according to one of the claims 1 to 4, wherein the data network (4) is an area network.

7. Device according to one of the claims 1 to 6, wherein at least one of the information stores (2) contains a data bank.

8. Method for processing and printing information that comprises the following steps:
- searching the information at a search station (1) that is connected via a data network (4) to one or more information storage devices (2),
- formatting the searched information in a form suitable for a printer device (3),
- printing the information at the printer device (3) to produce a print product, wherein
the information stored in the information storage device (2) or in the information storage devices (2) are searched according to the criterion of search terms prescribed by the user as well as according to a scope of the print product defined by the user.

9. Method according to claim 8, wherein a lower and an upper limit value for the data quantity to be searched are defined according to the criterion of the defined scope of the print product, and
the searched data quantity is set such that it lies between the two limit values.

10. Method according to claim 9, wherein the lower limit value is approximately 10 % to 20 % smaller than the upper limit value.

11. Method according to claim 8 or 10, wherein, following the implementation of the search at the search station (1), a cost message about the anticipated costs of the print copy is output (57), whereupon the user can confirm an order (S8).

12. Method according to one of the claims 8 to 11, wherein the print copy is bound (S13).

13. Method according to one of the claims 8 to 12, wherein the scope of the search defined by the scope of the print product is set such that further search results identified after complete exhaustion of the search scope are not taken into consideration.

14. Method according to one of the claims 8 to 13, wherein match criteria of the individual results are determined in the search operation, said match criteria being proportional to the hit precision, wherein the individual results having a low match criterion are not taken into consideration in the compilation of the final search result.

15. Method according to one of the claims 8 to 14, wherein ambiguities of the search terms are automatically excluded in the search operation in order to achieve a search with a small data quantity or synonyms of the search terms are taken into consideration for achieving a larger data quantity of the search result.

16. Method according to one of the claims 8 to 15, wherein, following an interrogation of the information stores with the given search terms, the identified search results are sent completely from the information stores to the search station (1) from which the interrogation was generated.

17. Method according to claim 16, wherein the search results are evaluated in the search station (1), i.e. that, for example, their data quantity, the match criteria and the like are identified.

18. Method according to one of the claims 8 to 15, wherein, following the interrogation of the individual information storage devices (2) with the search terms prescribed by the user, the information storage devices (2) send a message to the search station (1) by which the search had been generated, wherein the message contains a particular about the identified data quantity, the anticipated costs and/or a match criterion for the individual results, but the information to be printed is not contained therein.

19. Method according to claim 18, wherein, after an order confirmation (S8) has been placed, the print information is sent directly from the information storage device (2) to the printer device (3).

20. Method according to one of the claims 8 to 19, wherein an input mask that comprises a plurality of pairs of fields is displayed at the search station (1) for inputting the search terms, wherein the search criterion can be input in one field of the pairs of fields, and the search term for the input search criterion can be input in the other of the two fields.

21. Method according to claim 20, wherein the fields of the search terms are fundamentally operated with a logical "and" operation, and at least one further field is provided with which the logical "and" operation can be modified into a logical "or" operation.

## Revendications

1. Dispositif de traitement et d'impression d'informations comportant
- un ou plusieurs dispositifs de mémorisation d'informations (2),
- au moins un dispositif de recherche (1) destiné à rechercher les informations mémorisées dans le ou les dispositifs de mémorisation d'informations (2),
- un dispositif d'impression (3) destiné à imprimer un exemplaire impression qui contient les informations déterminées par le dispositif de recherche (1), le ou les dispositifs de mémorisation d'informations (2), le dispositif de recherche (1) et le dispositif d'impression (3) étant reliés entre eux par un réseau de données (4), et
le dispositif de recherche (1) comportant un module de critères de recherché (8) destiné à introduire des concepts de recherche, et un module de dimension d'exemplaire d'impression (9) destiné à déterminer la dimension de l'exemplaire impression, de sorte que la recherche peut être effectuée conformément aux concepts de recherche introduits et à la dimension prédéterminée de l'exemplaire impression.

2. Dispositif selon la revendication 1, dans lequel est prévu un dispositif de formatage (6) destiné à formater l'information déterminée au moyen du dispositif de recherche (1) en vue de l'édition au niveau du dispositif d'impression (7).

3. Dispositif selon la revendication 2, dans lequel le dispositif d'impression est conformé en station d'impression (3) dans laquelle sont intégrés le dispositif de formatage (6) et un appareil d'impression (7).

4. Dispositif selon la revendication 3, dans lequel la station d'impression (3) comporte un module de calcul (5) destiné à calculer le coût d'utilisation de la mémoire d'informations.

5. Dispositif selon l'une des revendications 1 à 4, dans lequel le réseau de données (4) est l'Internet ou un Intranet.

6. Dispositif selon l'une des revendications 1 à 4, dans lequel le réseau de données (4) est un réseau à zones.

7. Dispositif selon l'une des revendications 1 à 6, dans lequel au moins l'une des mémoires d'informations (2) contient une banque de données.

8. Procédé de traitement et d'impression d'informations, qui comporte les étapes suivantes consistant à :
- rechercher les informations au niveau d'une station de recherche (1) qui est reliée, via un réseau de données (4), à un ou plusieurs dispositifs de mémorisation d'informations (2),
- formater les informations recherchées sous une forme appropriée à un dispositif d'impression (3),
- imprimer les informations au niveau du dispositif d'impression (3) en vue d'obtenir un produit d'impression,
les informations mémorisées dans le dispositif de mémorisation d'informations (2) ou dans les dispositifs de mémorisation d'informations (2) sont recherchées conformément à des concepts de recherche prédéterminés par l'utilisateur, ainsi qu'à une dimension du produit d'impression, déterminée par l'utilisateur.

9. Procédé selon la revendication 8, dans lequel des valeurs limites inférieure et supérieure sont déterminées pour le flot de données recherché, conformément à la dimension du produit d'impression déterminée, et
le flot de données recherché est réglé de telle sorte qu'il se trouve dans la plage définie par les deux valeurs limites.

10. Procédé selon la revendication 9, dans lequel la valeur limite inférieure est inférieure de 10 % à 20 % environ à la valeur limite supérieure.

11. Procédé selon la revendication 8 ou 10, dans lequel une information relative aux coûts, auxquels il faut s'attendre, de l'exemplaire d'impression est obtenue (S7) en fonction de la recherche effectuée au niveau de la station de recherche (1), à partir de quoi l'utilisateur peut confirmer un ordre (S8).

12. Procédé selon l'une des revendications 8 à 11, dans lequel l'exemplaire d'impression est relié (S13).

13. Procédé selon l'une des revendications 8 à 12, dans lequel l'étendue de la recherche déterminée par la dimension du produit d'impression est réglée de telle sorte que, après épuisement complet de l'étendue de la recherche, on ne tient pas compte alors des résultats de recherche obtenus.

14. Procédé selon l'une des revendications 8 à 13, dans lequel il est déterminé, lors du processus de recherche, des critères de correspondance des résultats individuels qui sont proportionnels à la précision du but, les résultats de recherche individuels avec un faible critère de correspondance n'étant pas pris en compte lors de la combinaison des résultats de recherche définitifs.

15. Procédé selon l'une des revendications 8 à 14, dans lequel, lors du processus de recherche, les ambiguïtés des concepts de recherche sont exclues automatiquement pour effectuer une recherche avec un faible flot de données, ou les synonymes des concepts de recherche sont pris en compte pour obtenir un flot de données plus important des résultats de recherche.

16. Procédé selon l'une des revendications 8 à 15, dans lequel, en fonction de l'interrogation de la mémoire d'informations avec les concepts de recherche prédéterminés, les résultats de recherche obtenus sont entièrement envoyés des mémoires d'informations à la station de recherche (1) qui a généré l'interrogation.

17. Procédé selon la revendication 16, dans lequel les résultats de recherche sont exploités dans la station de recherche (1), c'est-à-dire qu'il est déterminé par exemple leur flot de données, les critères de correspondance et analogues.

18. Procédé selon l'une des revendications 8 à 15, dans lequel, selon l'interrogation des dispositifs de mémorisation d'informations individuels (2) au moyen des concepts de recherche prédéterminés par l'utilisateur, le dispositif de mémorisation d'informations (2) envoie un message à la station de recherche (1) d'où la recherche a été générée, le message contenant une indication sur le flot de données déterminé, les coûts auxquels il faut s'attendre et/ou un critère de correspondance relatif aux résultats individuels, mais l'information à imprimer n'y étant pas contenue.

19. Procédé selon la revendication 18, dans lequel, après confirmation d'un ordre (S8), les informations d'impression sont envoyées directement du dispositif de mémorisation d'informations (2) au dispositif d'impression (3).

20. Procédé selon l'une des revendications 8 à 19, dans lequel, pour introduire des concepts de recherche, il est indiqué à la station de recherche (1) un masque d'introduction qui comporte plusieurs paires de zones, le critère de recherche pouvant être introduit dans une zone de la paire de zones, et le concept de recherche relatif aux critères de recherche introduits pouvant être introduit dans l'autre des deux zones.

21. Procédé selon la revendication 20, dans lequel les zones des concepts de recherche sont fondamentalement combinées par une fonction logique « ET », et il est prévu au moins une autre zone permettant de modifier la fonction logique « ET » en fonction logique « OU ».
